# EUROPEAN PATENT APPLICATION

(11) **EP 1 903 259 A2**
(43) Date of publication of application: **26.03.2008**
(21) Application number: 07075799.2
(22) Date of filing: 13.09.2007
(51) Int. Cl.: F16H 48/30

(54) **Electromagnetic device for actuating a member for locking a rotating body, for example in a differential**

(30) Priority: 20.09.2006 IT MI20061785; 16.10.2006 IT MI20061983
(71) Applicant: Baruffaldi S.p.A., Tribiano (MI) (IT)
(72) Inventor: Boffelli, Piercarlo, Tribiano (MI) (IT); Bellotti, Claudio, Tribiano (MI) (IT); Depoli, Erminio, Tribiano (MI) (IT); Natale, Fabio, Tribiano (MI) (IT)
(74) Representative: Raimondi, Margherita

(57) **Abstract**

Device for displaceably actuating, in both senses of a longitudinal direction (X-X), a crown wheel (20) comprising means (1120), for example a differential lock, for actuating the crown wheel (20) itself, said actuating means (1120) being of the electromagnetic type.

## Description

The present invention relates to an electromagnetically operated device for displaceably actuating a member for locking a rotating body.

It is known, for example in the technical sector of vehicles, to use differentials associated with rotating shafts which are controlled and associated with means able to cause locking of the said differentials when predetermined relative rotation conditions of the connected shafts exist.

It is also known that locking of the differential is performed by means of engagement between front teeth, associated with the axially fixed rotating crown wheel, of the differential and the front teeth of a rotationally fixed, but axially movable, locking crown wheel, displacement of which is controlled by means of pneumatic pistons.

Although fulfilling its function, this solution results in the need for a complicated and costly arrangement of fluid conveying pipes and headers as well as means for keeping under pressure the piston actuating fluid, which are also subject to possible losses in head resulting in malfunctioning of the locking engagement system.

The technical problem which is posed, therefore, is to provide a device for displaceably actuating a rotating crown wheel, in particular, but not exclusively, of a system for locking a differential, which is able to overcome the drawbacks of the prior art, being reliable and secure.

In connection with this problem it is also required that this device should have small dimensions, be easy and inexpensive to produce and assemble and be able to be applied easily also in combination with pre-existing installations.

These results are obtained according to the present invention by a device for displaceably actuating, in both senses of a longitudinal direction, a locking crown wheel, which device comprises a device for displaceably actuating, in both senses of a longitudinal direction (X-X), a crown wheel comprising means for actuating the crown wheel itself, said actuating means being of the electromagnetic type.

Further details may be obtained from the following description of a non-limiting example of embodiment of the subject of the present invention provided with reference to the accompanying drawings in which:
- Figure 1 shows a schematic cross-section along an axial plane of the operating device according to the present invention;
- Figure 2 shows a front view of the actuating electromagnet of the device;
- Figure 3 shows a schematic cross-section of the electromagnet according to Fig. 2;
- Figs. 4a-4d show schematic cross-sections illustrating the operating sequence of the device according to the invention;
- Figure 5 shows a schematic cross-section of a further embodiment of the electromagnet in the rest position;
- Figure 6 shows a cross-section similar to that of Figure 5 with the electromagnet excited; and
- Figure 7 shows a schematic cross-section of a further variation of embodiment of the electromagnet according to Figure 5.

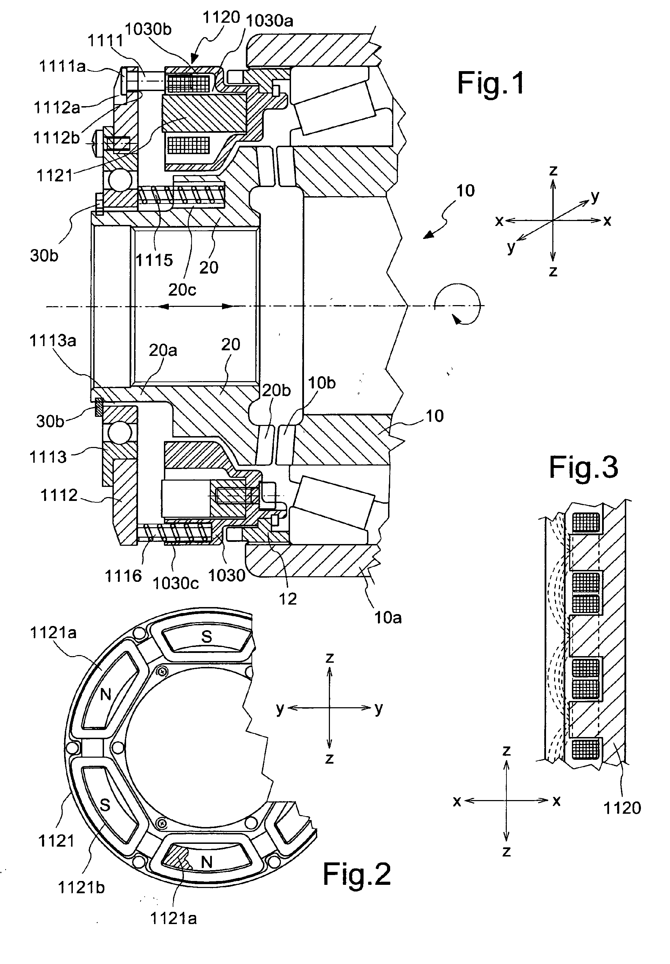

As shown in Fig. 1 and assuming solely for the sake of convenience of the description and without a limiting meaning a set of three reference axes with a longitudinal direction X-X, a transverse direction Y-Y and a vertical direction Z-Z as well as a front part corresponding to the axially fixed part l0a of the differential 10 and a rear part, opposite to the front part, the operating device according to the present invention acts on the crown wheel 20 for locking a differential 10, which crown wheel 20 comprises front teeth 20b able to mesh with corresponding front teeth 10b of the differential 10.

In greater detail the device comprises:
- a bell member 1030 rigidly connected to the fixed part 10a of the differential via a locking nut 12; said bell member 1030 is provided internally with:

- a first substantially axial seat 1030a able to house an electromagnet 1121 for recalling an armature 1112;
- second longitudinal seats 1030b able to house respective longitudinal guide pins 1111, the rear ends 1111a of which co-operate with the armature 1112, as will emerge more clearly below; and
- third seats 1030c for housing respective second longitudinal springs 1116, the rear ends of which exert an axial thrust on the said armature 1112, reacting with the opposite end on the bottom of the respective seat of the bell member.

The armature 1112 is mounted on a bearing 1113 mounted in the axial direction on a rear sleeve 20a rigidly connected to the locking crown wheel 20.

As shown, the bearing 1113 is mounted on said sleeve 20a so as to leave an annular gap 1113a between the inner race of the bearing and the sleeve itself; the latter also has, mounted thereon, a ring 30b able to form a rear end-of-travel stop for the bearing 1113.

The armature 1112 also has seats 1112a with a bottom hole 1112b able to allow the insertion, in the longitudinal direction, of the said guide pins 1111 which are prevented from coming out towards the front by the respective head 1111a having a diameter larger than that of the hole 1112b.

First springs 1115 are arranged between the bearing 1113 and the locking crown wheel 20, said springs being axially arranged and inserted inside a respective seat 20c of the locking crown wheel 20; in the configuration shown in Fig. 1 where the differential is open, said first springs extend in the rest condition.

As shown in Figures 2, 3 it is envisaged that the electromagnet 1121 is formed with a circular shape having a cross-section substantially in the form of an "overturned E" and has alternating N/S windings 1121b along the circumference, so that the magnetic flux lines are closed without passing through the longitudinal axis, thus resulting in the absence of stray magnetic fluxes which cause magnetization of various parts of the differential, said magnetization resulting in accumulation of metallic dust on the bearings which with time tend to operate inefficiently. According to a preferred embodiment, it is also envisaged that the magnet 1121 is formed by a plurality of packed laminar elements 1121a so as to increase the force of attraction with respect to the armature 1112.

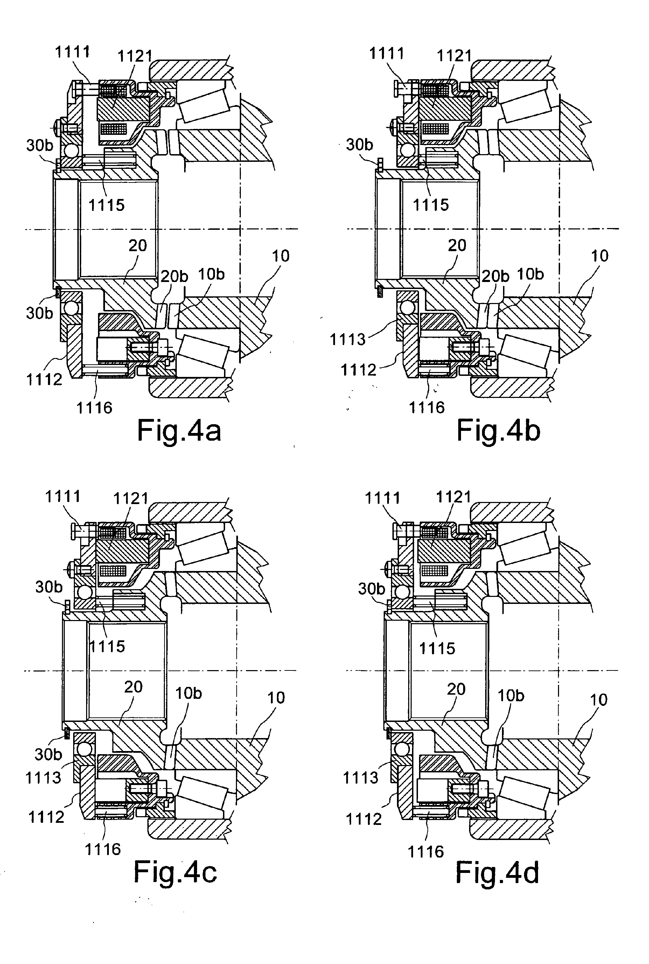

With this configuration and with reference to Figs. 4a to 4d, locking/unlocking of the differential is performed in the following sequence:
- in the rest condition (Fig. 4a) the electromagnet 1121 is deactivated, the armature 1112 is detached from the electromagnet 1121, pushed by the second springs 1116; in this condition the first springs 1115 are fully extended in the rest condition and the locking crown wheel 20 is disengaged from the front teeth 10b of the differential, which is free to rotate;
- when the differential must be locked (Fig. 4b), the electromagnet 1121 is activated so as to recall displaceably the armature 1112 which, guided by the pins 1111, moves forwards until it comes into contact against the electromagnet; during this stage, displacement of the armature causes the total compression of the second springs 1116 and the first springs 1115 which, reacting against the bearing 1113, push towards the front the locking crown wheel 20, the teeth 20b of which are able to bear frontally against the teeth 20a of the differential;
- when rotation of the differential causes alignment of a gully of the teeth 10b with the teeth 20b of the locking crown wheel 20 (Fig. 4c), the latter is able to move axially towards the differential pushed by the first springs 1115, which extend again;
- in order to unlock the differential (Fig. 4d) the electromagnet 1121 is deactivated, allowing the first springs 1115 to react against the locking the crown wheel 20 so as to push backwards the armature 1112 until it comes into contact with the end-of-travel stop 30b, in which position the springs 1115 no longer exert their thrusting force;
- at this point the locking crown wheel 20 is free to move, but remains in position until the residual torque which is exerted between the two sets of teeth 1Ob 20b decreases to a value less than the thrusting force of the second springs 1116 which, only in this condition, are able to push the armature 1112 and therefore the locking crown wheel 20 backwards, releasing the differential 10 which is able to start rotating again;
- the thrust of the second springs 1116 moves the assembly consisting of locking crown wheel 20/armature 1112 to the rear end-of-travel stop and restores operation for subsequent renewed actuation (Fig. 4a).

According to the invention it is envisaged, moreover, that activation of the electromagnet 1121 for recalling the armature 1112 is performed with a brief overcurrent transient so as to obtain a recall force sufficient to bring the armature 1112 into contact against the said electromagnet, this condition allowing the power supply current to the electromagnet to be reduced to normal values since the force required to keep the armature in contact is much less than that required for initial recall thereof.

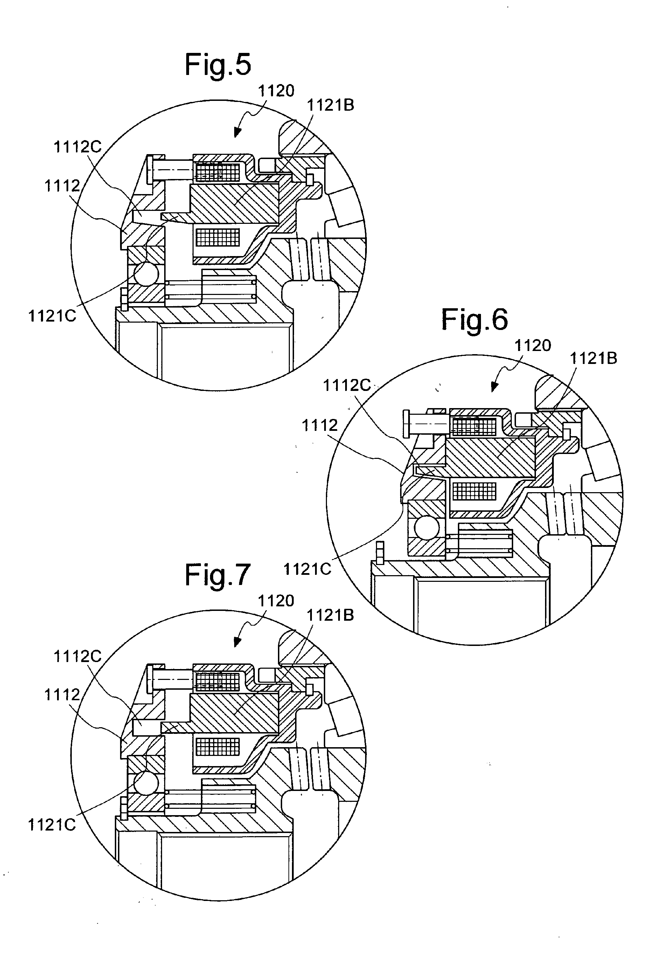

As shown in Figures 5 and 6 it is also envisaged providing the magnetic core 1121B of the electromagnet 1121 with an axial extension 1121C able to reduce the air gap existing between the electromagnet 1121 and the armature 1112.

With this solution it is possible to obtain an improved performance of the clutch system since the reduction in the air gap also allows a reduction in the initial overcurrent for recalling the armature.

As shown in detail in Figure 6, the axial extension 1121C is arranged inside a seat 1112C of the armature 1112, said seat having suitable dimensions able to allow insertion of the extension 1121C without mutual contact when the armature 1112 is recalled (Fig. 6).

Preferably the axial extension 1121C and the corresponding seat 1112C of the armature have a frustoconical shape so as to favour insertion, but, as shown in Figure 7, the axial extension 1121C may also be formed with a rectangular cross-section.

It can therefore be seen how, with the axial actuating device according to the present invention, it is possible to achieve secure and reliable engagement/disengagement of the two sets of front teeth, which in the example described form part of a locking differential, avoiding the need for fluid conveying pipes and the associated problems for example due to possible losses in head and the like and ensuring safe operation due to the fact that duplication of the thrusting springs ensures safe recall of the armature and preparation of the crown wheel for engagement which can occur at any useful moment without damaging the electromagnet which otherwise would have to be kept in a condition where it is supplied with an overcurrent for long periods of time.

Moreover, owing to the particular characteristics of the electromagnet, which can be excited with an overcurrent transient, it is possible to reduce the dimensions and house completely the locking device inside the box of the differential, avoiding the need for parts and associated volumes outside of it.

Also, owing to the particular form of the bearing 1113 supporting the armature, which moves coaxially on the locking crown wheel without contact, it is possible to avoid wear from frictional contact as well as wear of the armature which, rotating on the outer race of the said bearing, is not subject to frictional forces resulting from contact in the axial direction with the end-of-travel stops.

## Claims

1. Device for displaceably actuating, in both senses of a longitudinal direction (X-X), a crown wheel (20) comprising means (1120) for actuating the crown wheel (20) itself, **characterized in that** said actuating means (1120) are of the electromagnetic type.

2. Device according to Claim 1, **characterized in that** said actuating means (1120) comprise a fixed electromagnet (1121) able to recall an armature (1112) movable displaceably in the longitudinal direction (X-X).

3. Device according to Claim 2, **characterized in that** said electromagnet is housed inside a respective seat (1030a) of a fixed bell member (1030) coaxial with the crown wheel (20).

4. Device according to Claim 2, **characterized in that** said armature (1112) is coaxially mounted on the crown wheel (20).

5. Device according to Claim 4, **characterized in that** said armature (1112) is mounted on the outer race of a bearing (1113), the inner race of which is coaxially arranged on the crown wheel (20).

6. Device according to Claim 5, **characterized in that** said bearing (1113) is mounted on the crown wheel (20) with an annular gap (1113a) between its inner race and the said crown wheel (20).

7. Device according to Claim.5, **characterized in that** a rear end-of-travel ring (30b) for the travel of the bearing (1113) carrying the armature (1112) is mounted on said crown wheel (20).

8. Device according to Claim 2, **characterized in that** it comprises first resilient means (1115) arranged between the crown wheel (20) and the armature (1112) and able to exert a thrust opposing the recall force of the electromagnet (1121).

9. Device according to Claim 3, **characterized in that** it comprises second resilient means (1116) arranged between the armature (1112) and the fixed bell member (1030) carrying the electromagnet (1121) and able to exert a thrust opposing the recall force of the electromagnet (1121).

10. Device according to Claim 2, **characterized in that** said armature (1112) is associated with guide means (1111) longitudinally arranged between the said armature and the fixed bell member (1030) supporting the electromagnet (1121).

11. Device according to Claim 10, **characterized in that** said guide means consist of longitudinal pins (1111) able to engage with a corresponding through-hole (1112b) in the armature (1112) and provided with a respective head (1111a) having a diameter greater than that of the hole (1112b).

12. Device according to Claim 2, **characterized in that** said electromagnet (1121) is formed with a circular shape having a cross-section substantially in the form of an "overturned E" and with alternating N/S windings (1121b) along the circumference.

13. Device according to Claim 12, **characterized in that** the magnetic flux lines are closed on the N/S poles without passing through the longitudinal axis.

14. Device according to Claim 2, **characterized in that** said electromagnet (1121) is formed by a plurality of laminar elements (1121a) packed together.

15. Device according to Claim 2, **characterized in that** said electromagnet (1121) is activated with a transient overcurrent.

16. Device according to Claim 2, **characterized in that** the magnetic core (1121B) of the electromagnet (1121) has an axial extension (1121C).

17. Device according to Claim 16, **characterized in that** said armature (1112) has a seat (1112C) suitable for engagement, without mutual contact, with said extension (1121C) of the magnetic core.

18. Device according to Claim 16, **characterized in that** said axial extension (1121C) and the corresponding seat (1121C) of the armature have a frustoconical cross-section.

19. Device according to Claim 16, **characterized in that** said axial extension (1121C) and the corresponding seat (1112C) of the armature have a rectangular cross-section.

20. Device according to Claim 19, **characterized in that** said crown wheel (20) has front teeth (20b) able to mesh with corresponding front teeth (10b) of a rotating member (10) so as to perform rotational locking thereof.

21. Device according to Claim 20, **characterized in that** said circular crown wheel (20) is the locking crown wheel of a differential (10).

22. Differential comprising a member (10) rotating about a longitudinal axis (X-X) and provided with a frontally toothed crown wheel (10b) and a locking crown wheel (20) having corresponding front teeth (20b) and displaceable in both senses of the said longitudinal axis (X-X) and means (1120) for displaceably actuating the said locking crown wheel (20), **characterized in that** said means (1120) for actuating the crown wheel are of the electromagnetic type (1121).

23. Differential according to Claim 22, **characterized in that** said actuating means (1120) comprise a fixed electromagnet (1121) able to recall an armature (1112) displaceable in the longitudinal direction (X-X).

24. Differential according to Claim 23, **characterized in that** said electromagnet is housed inside a respective seat (1030a) of a bell member (1030) which is fixed and coaxial with the crown wheel (20).

25. Differential according to Claim 24, **characterized in that** said armature (1112) is coaxially mounted on the crown wheel (20).

26. Differential according to Claim 25, **characterized in that** said armature (1112) is mounted on the outer race of a bearing (1113), the inner race of which is coaxially arranged on the crown wheel (20).

27. Differential according to Claim 26, **characterized in that** said bearing (1113) is mounted with an annular gap (1113a) between its inner race and the crown wheel (20).

28. Differential according to Claim 27, **characterized in that** a rear end-of-travel ring (30b) for the travel of the bearing (1113) supporting the armature (1112) is mounted on said crown wheel (20).

29. Differential according to Claim 23, **characterized in that** it comprises first resilient means (1115) arranged between the crown wheel (20) and the armature (1112) and able to exert a thrust opposing the recall force of the electromagnet (1121).

30. Differential according to Claim 23, **characterized in that** it comprises second resilient means (1116) arranged between the armature (1112) and the fixed bell member (1030) carrying the electromagnet (1121) and able to exert a thrust opposing the recall force of the electromagnet (1121).

31. Differential according to Claim 23, **characterized in that** said armature (1112) is associated with guide means (1111) longitudinally arranged between the said armature and the fixed bell member (1030) supporting the electromagnet (1121).

32. Differential according to Claim 31, **characterized in that** said guide means (1111) consist of longitudinal pins able to engage with a corresponding through-hole (1112b) in the armature (1112) and provided with a respective head (1111a) having a diameter greater than that of the hole (1112b).

33. Differential according to Claim 23, **characterized in that** said electromagnet (1121) is formed with a circular shape having a cross-section substantially in the form of an "overturned E" and with alternating N/S windings (1121b) along the circumference.

34. Differential according to Claim 33, **characterized in that** the magnetic flux lines are closed on the N/S poles without passing through the longitudinal axis.

35. Differential according to Claim 23, **characterized in that** said electromagnet (1121) is formed by a plurality of laminar elements (1121a) packed together.

36. Differential according to Claim 23, **characterized in that** said electromagnet (1121) is activated with a transient overcurrent.

37. Differential according to Claim 23, **characterized in that** the magnetic core (1121B) of the electromagnet (1121) has an axial extension (1121C).

38. Differential according to Claim 37, **characterized in that** said armature (1112) has a seat (1112C) able to engage, without mutual contact, with said extension (1121C) of the magnetic core.

39. Differential according to Claim 37, **characterized in that** said axial extension (1121C) and the corresponding seat (1112C) of the armature have a frustoconical cross-section.

40. Differential according to Claim 37, **characterized in that** said axial extension (1121C) and the corresponding seat (1112C) of the armature have a rectangular cross-section.

41. Differential according to Claim 22, **characterized in that** said crown wheel (20) has front teeth (20b) able to mesh with corresponding front teeth (10b) of a rotating member (10) so as to perform rotational locking thereof.

42. Differential according to Claim 41, **characterized in that** said circular crown wheel (20) is the locking crown wheel of a differential (10).
